**Europäisches Patentamt**

**European Patent Office**

**Office européen des brevets**

(19)

(11) Veröffentlichungsnummer: **0 242 704**
B1

(12)

# EUROPÄISCHE PATENTSCHRIFT

(45) Veröffentlichungstag der Patentschrift:
**15.11.89**

(21) Anmeldenummer: **87105178.5**

(22) Anmeldetag: **08.04.87**

(51) Int. Cl.⁴: **B64D 11/00**, A62B 17/04

(54) **Notversorgungseinheit mit einem Atmungsgerät.**

(30) Priorität: **24.04.86 DE 3613814**

(43) Veröffentlichungstag der Anmeldung:
**28.10.87 Patentblatt 87/44**

(45) Bekanntmachung des Hinweises auf die Patenterteilung:
**15.11.89 Patentblatt 89/46**

(84) Benannte Vertragsstaaten:
**DE ES FR GB IT**

(56) Entgegenhaltungen:
**DE-A- 3 122 225**
**GB-A- 878 119**
**GB-A- 2 089 662**
**US-A- 4 116 237**
**US-A- 4 559 939**

(73) Patentinhaber: **Drägerwerk Aktiengesellschaft,**
**Moislinger Allee 53-55, D-2400 Lübeck 1(DE)**

(72) Erfinder: **Drews, Wolfgang, Dipl.-Ing., Mönchteich 1,**
**D-2061 Bahrenhof(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Notversorgungseinheit gemäß dem Oberbegriff des Patentanspruchs 1.

Eine derartige Notversorgungseinheit ist aus der US-A 4 559 939 bekanntgeworden. Sie ist in der Rückenlehne eines Sitzes für Flugpassagiere untergebracht und kann entweder von einer zentralen Gasversorgung mit Atemluft gespeist oder von einer an der Schutzhaube aufgenommenen Sauerstoffquelle versorgt werden.

Sie weist jedoch keine Rettungsmittel auf für den Fall, daß die Notsituation einer Wasserung auftreten sollte.

Bei einer bekannten Versorgungseinheit entsprechend der DE-OS 3 122 225 sind dessen Einzelteile in einem Gehäuse untergebracht, welches beispielsweise in der Armlehne eines Sessels für die Fluggäste eingebaut ist. Bei Druckabfall in der Flugzeugkabine muß die Sauerstoffversorgung der Fluggäste über dieses Atmungsgerät erfolgen. Dazu wird eine Klappe des Gehäuses geöffnet, und die Einzelteile des Atmungsgerätes, die aus einem Sauerstofferzeuger und einer Maske bestehen, können über einen Schlitten herausgefahren werden. Die Maske wird entnommen und angelegt, so daß eine autonome Atmung ermöglicht wird.

Das bekannte Atmungsgerät weist den Nachteil auf, daß der Fluggast nur dann mit Sauerstoff versorgt werden kann, solange er auf dem Sessel sitzt. Wird in einem Notfall eine Flucht der Fluggäste aus dem Flugzeug notwendig, ist die Fortführung der Sauerstoffversorgung nicht mehr gegeben.

Ein weiteres bekanntes Atmungsgerät für Luftfahrzeuge ist aus der DE-U 1 538 231 bekannt. Bei diesem Atmungsgerät sind für eine autonome Sauerstoffversorgung der Fluggäste sämtliche dafür notwendige Geräte in einem Gehäuse untergebracht, welches wie ein Koffer tragbar ist und für den stationären Einsatz an geeigneter Stelle im Fluggastraum befestigt ist.

Derartige Atmungsgeräte benötigen jedoch in der Bereitschaft viel Platz und sind für einen mobilen Einsatz ungeeignet, da der Fluggast das Atmungsgerät in einem Koffer tragen muß.

Der vorliegenden Erfindung liegt die Aufgabe zugrunde, eine Notversorgungseinheit der genannten Art so zu verbessern, daß sie nach der Entnahme aus dem Gehäuse als eigenständige Einheit benutzbar und für den mobilen Gebrauch vielseitig einsatzbereit ist. Die Aufgabe wird bei einer Versorgungseinheit der genannten Art durch die kennzeichnenden Merkmale des Anspruchs 1 gelöst.

Der Vorteil der Erfindung ist darin zu sehen, daß die Notversorgungseinheit für den stationären Gebrauch innerhalb einer Flugzeugkabine dem Fluggast als kompakte Einheit zur Verfügung steht, wobei er lediglich die Maske auf seinen Nasen- und Mundbereich zu drücken braucht, um mit Sauerstoff versorgt werden zu können. Da alle der Sauerstoffversorgung dienenden Geräteteile für jeden Fluggast zur Verfügung stehen, kann er im Bedarfsfalle, wenn eine Flucht aus dem Fahrgastraum notwendig wird, den gelösten Gehäuseteil, wie Deckel, mit Hilfe der Tragebänderung leicht beispielsweise am Rücken befestigen, so daß seine volle Bewegungsfreiheit erhalten bleibt, während er mit Sauerstoff versorgt wird.

Der Träger der Notversorgungseinheit ist nicht nur während seines Aufenthaltes in der Flugzeugkabine vor atmungsgefährdenden Schäden und/oder Rauchschäden geschützt, sondern er genießt diesen Schutz auch während seiner Rettung bzw. Flucht aus dem Flugzeug. Er trägt zudem auch bei einer Rettung aus einem notgewasserten Flugzeug gleichzeitig eine Rettungsweste, ohne diese noch zusätzlich zu den schon aufgesetzten Maske und Schutzhaube überziehen zu müssen. Ein zusätzliches Überziehen einer Schwimmweste bei schon aufgesetzter Schutzhaube würde die Handhabung dermaßen erschweren, daß ein zuverlässiges Anlegen der Rettungsweste nicht sichergestellt ist.

Zum Schutz vor Beschädigungen während des Betriebs oder im Fluchtfalle kann zweckmäßigerweise vorgesehen sein, die Einzelteile der Notversorgungseinheit mit einem Gitterwerk zu umhüllen, so daß der Deckel und das Gitterwerk als ein geschlossener und stoßgeschützter Behälter angesehen werden können.

Die Notversorgungseinheit kann je nach zur Verfügung stehenden Unterbringungsplätzen im Deckenbereich oberhalb der Fluggastsessel in Gehäusen angeordnet sein, aus denen bei eventuellen Druckabfall in der Fluggastkabine der Deckel geöffnet wird und die Atemmaske von selbst herausfällt. Für einen späteren mobilen Einsatz der Notversorgungseinheit ist der Deckel dann zusammen mit den übrigen Einzelteilen von dem Gehäuse abtrennbar und kann von dem Fluggast umgebunden werden. Andere Unterbringungsmöglichkeiten bieten sich in den Lehnen der Sitze oder unterhalb der Sitzfläche an.

Ein Ausführungsbeispiel der Erfindung wird anhand der Zeichnung schematisch dargestellt und im folgenden näher erläutert.

Es zeigen

Fig. 1 die Ansicht einer Notversorgungseinheit in perspektivischer Darstellung,

Fig. 2 die angelegte Notversorgungseinheit mit Rauchschutzhaube und Schwimmweste.

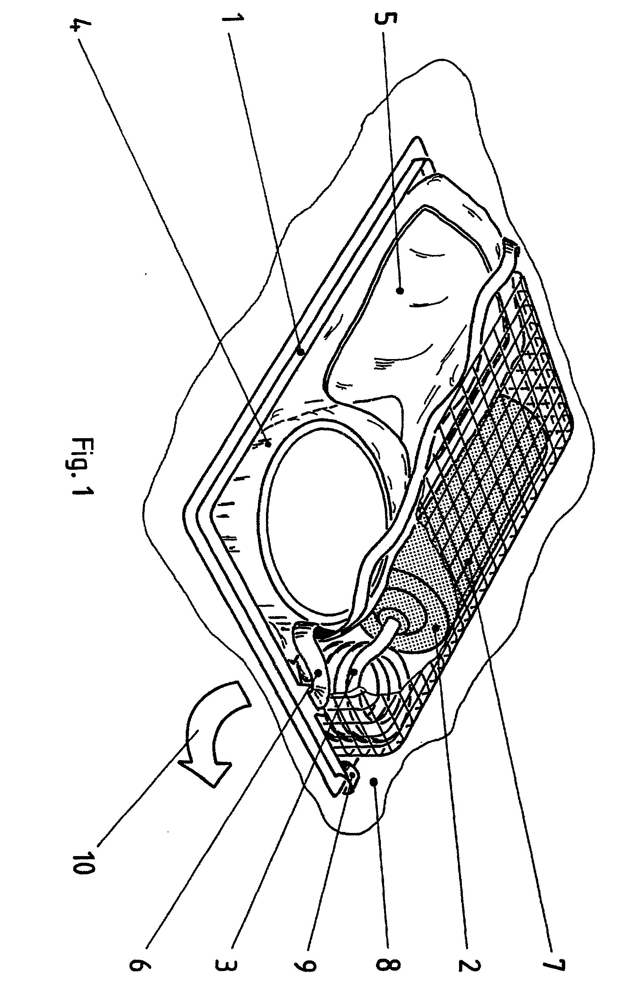

In Fig. 1 ist die Notversorgungseinheit dargestellt, deren Einzelteile auf einer Unterlage (1), die beispielsweise ein Gehäusedeckel sein kann, montiert sind. Die Einzelteile bestehen aus einer sauerstoffabgebenden Versorgungseinheit (2), bfeispielsweise einer Sauerstoffdruckflasche oder einer sauerstoffabgebenden Chemikalie in einem entsprechenden Gehäuse, sowie einem Verbindungsschlauch (3) zwischen der Sauerstoffquelle und einer Maske (4). Des weiteren befindet sich auf der Unterlage eine Rauchschutzhaube (5), die mit der Maske (4) verbunden ist. An der Unterlage (1) sind an geeigneter Stelle Nackengurte (6) befestigt, die ein Tragen der Notversorgungseinheit im Fluchtfalle ermöglichen. Sämtliche auf der Unterlage (1) montierten Einzelteile sind mit einem Drahtgitter (7) umschlossen. Dieses Drahtgitter (7) enthält auf einer Seite eine Öffnung zur Entnahme der Maske (4) mit ihrer Rauchschutzhaube (5). Die Unterlage (1) kann beispielsweise in einem Gehäuse (8) eingelassen sein, welches in der dargestellten Form nur teilweise angedeutet ist. Die gebildete Notversorgungseinheit ist über die lösbaren Scharniere (9) aus dem Gehäuse (8) in Richtung der Pfeiles (10) herausschwenkbar und herauslösbar angeordnet.

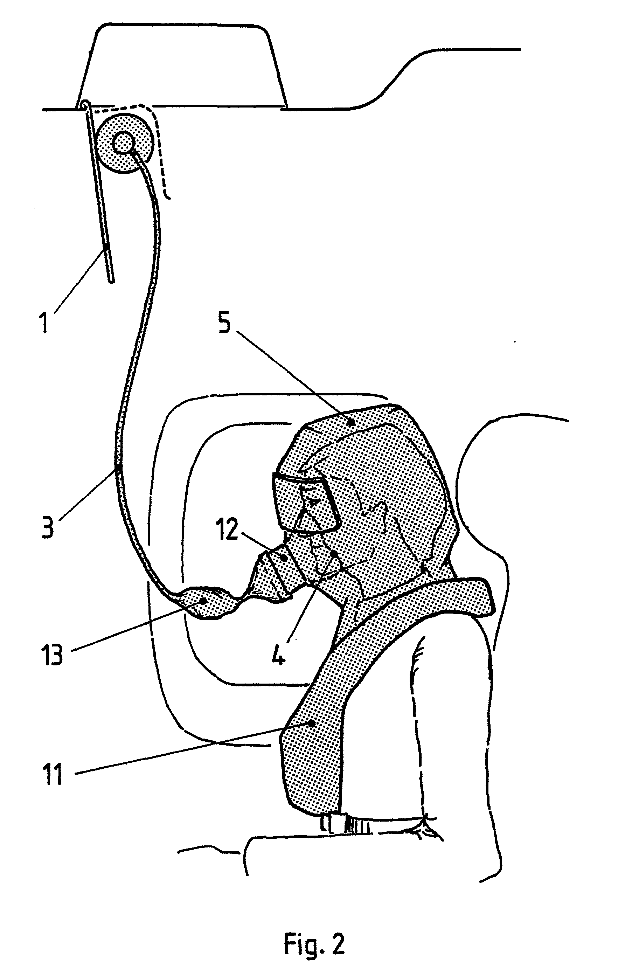

In der Fig. 2 ist eine Notversorgungseinheit dargestellt, wobei die Rauchschutzhaube (5) zusammen mit einer an ihr befestigten Schwimmweste (11) über den Kopf- und Nacken- sowie Schulter- und Brustbereich eines Fluggastes aufgestülpt ist. Die Maske (4) ist über ein Filter (12) und einen Atembeutel (13) mit dem Verbindungsschlauch (3) zu der Sauerstoffquelle (2) verbunden.

## Patentansprüche

1. Notversorgungseinheit mit einem Atmungsgerät zur Sauerstoffversorgung von Fluggästen, das eine $O_2$-abgebende Versorgungseinheit (2) und eine Maske (4) mit einer Schutzhaube (5) enthält, die in einem öffenbaren Gehäuse aufgenommen sind, dadurch gekennzeichnet, daß die Versorgungseinheit (2), die $O_2$-abgebende Maske (4) und die Rauchschutzhaube (5), an deren Kragen eine Schwimmweste (11) angearbeitet ist, auf einem Gehäuseteil (1) montiert sind, welcher lösbar mit dem Gehäusekörper (8) verbunden und mit einer Tragebänderung (6) versehen ist.

2. Notversorgungseinheit nach Anspruch 1, dadurch gekennzeichnet, daß die Versorgungseinheit (2), die $O_2$-abgebende Maske (4), die Rauchschutzhaube (5) und die Schwimmweste (11) von einem Gitterwerk (7) umhüllt sind.

## Claims

1. An emergency supply device with a respiration device for supplying oxygen to airline passengers, comprising an oxygen-releasing supply device (2) and a mask (4) having a protective hood (5), which are accommodated in a housing which can be opened, characterised in that the oxygen-releasing supply device (2), the mask (4) and the anti-smoke hood (5), to the collar of which a lifejacket (11) is attached, are mounted on a housing part (1), which is detachably connected with the housing body (8) and is provided with a carrying strap (6).

2. An emergency supply device according to claim 1, characterised in that the oxygen-releasing supply unit (2), the mask (4), the antismoke hood (5) and the lifejacket (11) are surrounded by a lattice structure.

## Revendications

1. Unité respiratoire de secours avec un inhalateur, pour l'alimentation en oxygène de passagers d'avions, qui contient une unité d'alimentation (2) délivrant de l'oxygène et un masque respiratoire (4) muni d'une cagoule de protection (5), qui sont logés dans un boîtier qui peuvent être ouverts, caractérisée en ce que l'unité d'alimentation (2) délivrant de l'oxygène, le masque respiratoire (4) et la cagoule de protection (5) contre les fumées, sur le col de laquelle est rapporté un gilet de sauvetage (11), sont montés sur une partie (1) du boîtier, qui est assemblée de manière détachable au corps (8) du boîtier, et qui est munie d'une sangle (6) pour porter cette partie de boîtier.

2. Unité respiratoire de secours selon la revendication 1, caractérisée en ce que l'unité d'alimentation (2) délivrant de l'oxygène, le masque respiratoire (4), la cagoule de protection (5) contre les fumées et le gilet de sauvetage (11) sont enveloppés par un treillis (7).

Fig. 1

EP 0 242 704 B1

Fig. 2